# EUROPEAN PATENT APPLICATION

(11) **EP 0 917 066 A2**
(43) Date of publication of application: **19.05.1999**
(21) Application number: 98309097.8
(22) Date of filing: 06.11.1998
(51) Int. Cl.: G06F 13/40, G06F 13/28

(54) **Method and apparatus for concurrent data transfer in a PCI to PCI input output processor**

(30) Priority: 14.11.1997 US 970366
(71) Applicant: Compaq Computer Corporation, Houston Texas 77070 (US)
(72) Inventor: Purcell, Brian T., Tomball, Texas 77375 (US); Whiteman, William F., Cypress, Texas 77429 (US); Bonola, Thomas J., Tomball, Texas 77375 (US)
(74) Representative: Brunner, Michael John

(57) **Abstract**

A system for concurrent data transfer in a bus to bus input output processor including a first data path for moving data between a primary bus and a first memory, a second data path for moving data between a secondary bus and the second memory and a third data path for moving data between the primary bus, the first memory, the secondary bus, the second memory and an embedded processor. A controller controls the concurrent movement of data within the input output processor and further can convert a plurality of address lines used in the third data path for use as data lines. To effectuate the concurrent transfer of data across the various data paths, the controller isolates the embedded processor from the third data path and assigns a first destination device and a first data path to the first memory. The controller further assigns a second destination device and a second data path to the second memory. Data is then simultaneously transferred between a cache and the embedded processor, between the first memory and the first destination device across the first data path and between the second memory and the second destination device across the second data path. Data is also transferred across the primary bus to or from the input output device and across the secondary bus to or from the input output device.

## Description

The present invention relates in general to data transfer in an Input Output Processor which interfaces a first bus to a second bus, and more particularly, but not by way of limitation, to a method and apparatus for performing concurrent transfers between a primary Peripheral Component Interconnect bus, a secondary Peripheral Component Interconnect bus and local memory of an Input Output Processor.

It is often desirable in computing systems to bridge a first data bus to a second data bus to allow communication between devices connected to separate busses. Typically, a bus to bus bridge is used as an interface to connect the two busses to one another. For example, a Peripheral Component Interconnect (PCI) to Peripheral Component Interconnect bridge (PCI to PCI bridge) is used to interface a primary PCI bus to a secondary PCI bus. In many instances, however, it is desirable for the bus to bus interface to act not only as an interface between the separate busses, but also to process the data in some manner. For example, it may be desirable to perform an encryption or decryption algorithm on the data as it moves through the PCI to PCI bridge. Increasingly, PCI to PCI bridges are being incorporated into an Input Output Processor (IOP) which includes an embedded processor for processing the data as it moves through the IOP. To provide a data path within the IOP, for the various processing functions, a local bus is used to provide communication between the embedded processor, a local memory, the PCI to PCI bridge and other functionality.

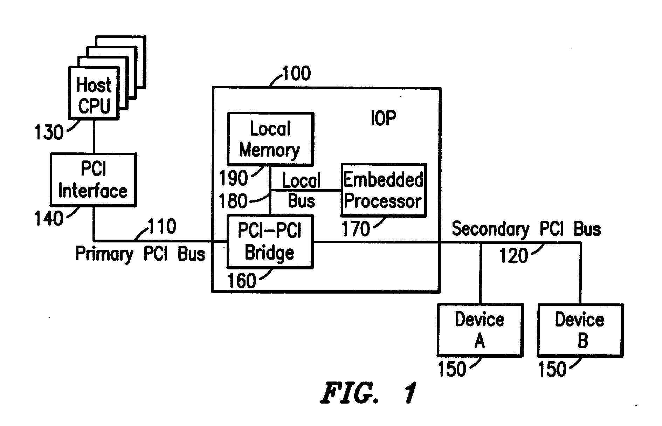

Referring now to Fig. 1, there is illustrated a functional block diagram of atypical IOP 100 used to connect a primary PCI bus 110 to a secondary PCI bus 120. One or more host Central Processing Units (CPUs) 130 communicate across the primary PCI bus via a PCI bridge interface 140. The Primary PCI bus 110 interfaces to the secondary PCI bus 120 via a PCI to PCI bridge 160 located within the IOP 100 for direct transfers between the primary PCI bus 110 and the secondary PCI bus 120. One or more secondary PCI devices 150 are connected to the secondary PCI bus 120 and communicate with the host CPUs 130 via the secondary PCI bus 120, the PCI to PCI bridge 160 and the primary PCI bus 110. A local bus 180 effectuates communication between an embedded processor 170, a local memory 190 and the PCI to PCI bridge 160.

In a typical IOP 100 used to connect a primary PCI bus 110 to a secondary PCI bus 120 there are four types of data transfers which can occur. First, the host CPUs 130 can access the secondary PCI devices 150 via the primary PCI bus 110, the PCI to PCI bridge 160 and the secondary PCI bus 120. Second, the host CPUs 130 can access the local memory 190 via the primary PCI bus 110, the PCI to PCI bridge 160 and the local bus 180. Third, the secondary PCI devices 150 can access the local memory 190 via the secondary PCI bus 120, the PCI to PCI bridge 160 and the local bus 180. Fourth, the embedded processor 170 can access the local memory 190 via the local bus 180.

Of these four types of data transfers, only the first and the fourth can occur concurrently since these two transfers involve the use of different data paths. In the case of the second type, where the host CPUs 130 access the local memory 190, the embedded processor 170 and the secondary PCI devices 150 are temporarily blocked from accessing the local memory 190. Similarly, in the case of the third type, where the secondary PCI devices 150 access the local memory 190, the embedded processor 170 and the host CPUs 130 are temporarily blocked from accessing the local memory 190. Furthermore, in the case of the fourth type, where the embedded processor 170 accesses the local memory 190, the host CPUs 130 and the secondary PCI devices 150 are temporarily blocked from accessing the local memory 190.

Due to the limited ability for concurrent data transfers, the local bus of current IOPs used to connect a primary PCI bus to a secondary PCI bus quickly becomes a bottle neck in the operation of the IOP. It would be advantageous therefore to devise a method and apparatus for effectuating concurrent data transfers in an Input Output Processor used to interface a first bus to a second bus.

The present invention comprises a method and apparatus for concurrent data transfer in a bus to bus input output processor. The computer system includes a first memory and a second memory. A first data path for moving data between a primary bus and the first memory comprises a primary bus interface and a first direct memory access controller. A second data path for moving data between a secondary bus and the second memory comprises a secondary bus interface and a second direct memory access controller. A third data path for moving data between the primary bus interface, the first memory, the secondary bus interface, the second memory and an embedded processor is comprised of a local bus having a plurality of data lines and a plurality of address lines. A controller is used to control the concurrent movement of data within the input output processor and further can convert the plurality of address lines of the third data path for use as an additional plurality of data lines.

To concurrently transfer data across the various data paths within the input output processor the controller isolates the embedded processor from the local bus and assigns a first destination device and a first data path to the first direct memory access controller. The controller further assigns a second destination device and a second data path to the second direct memory access controller. Data is then simultaneously transferred between a cache and the embedded processor, between the first direct memory access controller and the first destination device across the first data path and between the second direct memory access controller and the second destination device across the second data path. Data is also transferred across the primary bus to or from the input output device and across the secondary bus to or from the input output device.

A more complete understanding of the present invention may be had by reference to the following Detailed Description and appended claims, when taken in conjunction with the accompanying Drawings wherein:
Figure 1 is a functional block diagram of an IOP currently used to connect a primary PCI bus to a secondary PCI bus;
Figure 2 is a functional block diagram of an IOP for effectuating concurrent data transfers consistent with a preferred embodiment of the present invention; and
Figure 3 is a flow diagram of a method for concurrent data transfer in an IOP consistent with the preferred embodiment of the present invention described in Fig 2.

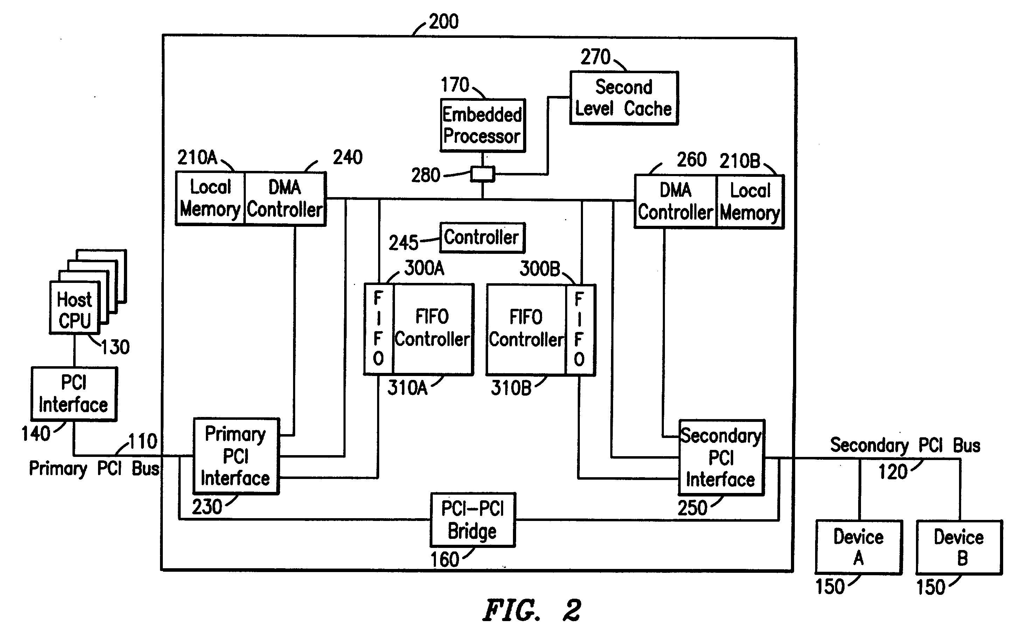

Referring now to Fig. 2, there is illustrated a functional block diagram of an IOP for effectuating concurrent data transfers consistent with a preferred embodiment of the present invention. An IOP 200 communicates with one or more host CPUs 130 via a primary PCI bus 110 and a PCI interface 140. Similarly, the IOP 200 communicates with one or more secondary PCI devices 150 via a secondary PCI bus 120. To move data directly between the host CPUs 130 and the secondary PCI devices 150, a PCI to PCI bridge 160, whose operation and construction is well known in the industry, provides a data path between the primary PCI bus 110 and the secondary PCI bus 120. The PCI to PCI bridge 160 coordinates the bus cycles of both busses and effectuates the necessary bus protocol, handshaking, control and arbitration in a manner consistent with those well understood in the industry.

In other instances, however, instead of performing a direct transfer between the primary PCI bus 110 and the secondary PCI bus, it is desirable for the data to be processed by the IOP 200. As an example, the IOP 200 may perform an encryption or decryption algorithm on the data as it is transferred between the primary bus 110 and the secondary bus 120. As a still further example, the IOP 200 is capable of supporting I₂O features and protocol. In order to process the data, the data is first loaded into local memory of the IOP 200 and an embedded processor 170 performs the processing function on the data prior to the data being transferred to its ultimate destination.

In the preferred embodiment of the present invention the local memory of the IOP 200 is partitioned into a first memory 210A and a second memory 210B. Furthermore, in the preferred embodiment, the first memory 210A and the second memory 210B are dual ported. The use of dual ports allows the first memory 210A to be accessed simultaneously by a first Direct Memory Access (DMA) controller 240 and a local bus 180. Likewise, the use of dual ports allows the second memory 210A to be accessed simultaneously by a second Direct Memory Access (DMA) controller 260 and the local bus 180. A first data path, comprised of a primary PCI interface 230 and the first DMA controller 240, effectuates bidirectional data transfers between the primary PCI bus 110 and the first memory 210A under the direction of a controller 245 when the IOP 200 initiates a data transfer as the primary PCI bus 110 master. Alternatively, when the IOP 200 is not the primary PCI bus 110 master, data transfers between the primary PCI bus 110 and the IOP 200 occur in a traditional fashion using a target memory controller (not shown) commonly known in the industry. The primary PCI interface 230 converts the bus cycles of the primary PCI bus 110 to and from the bus cycles of the IOP 200 and coordinates bus protocols, device handshaking, bus arbitration and other control functions in a manner consistent with those well known in the industry necessary to interface the IOP 200 to the primary PCI bus 110.

The first DMA controller 240 effectuates direct memory access transfers between the host CPUs 130 and the first memory 210A via the primary PCI interface 230 and the primary PCI bus 110. The first DMA controller 240 also provides bidirectional direct memory access transfers between the first memory 210A and the second memory 210B via the local bus 180 and the secondary PCI devices 150 via the local bus 180, a secondary PCI interface 250 and the secondary PCI bus 120. Additionally, the first DMA controller 240 provides unidirectional direct memory access transfers to a second FIFO 300B via the local bus 180.

A second data path, comprised of the secondary PCI interface 250 and the second DMA controller 260, effectuates bidirectional data transfers between the secondary PCI bus 120 and the second memory 210B under the direction of the controller 245 when the IOP 200 initiates a data transfer as the secondary PCI bus 120 master. Alternatively, when the IOP 200 is not the secondary PCI bus 120 master, data transfers between the secondary PCI bus 120 and the IOP 200 occur in a traditional fashion using a target memory controller (not shown) commonly known in the industry. The secondary PCI interface 250 converts the bus cycles of the secondary PCI bus 120 to and from the bus cycles of the IOP 200 and coordinates bus protocols, device handshaking, bus arbitration and other control functions in a manner consistent with those well known in the industry necessary to interface the IOP 200 to the secondary PCI bus 120.

The second DMA controller 260 effectuates direct memory access transfers between the secondary PCI bus devices 150 and the second memory 210B via the secondary PCI interface 250 and the secondary PCI bus 120. The second DMA controller 260 also provides bidirectional direct memory access transfers between the second memory 210B and the first memory 210A via the local bus 180 and the host CPUs 130 via the local bus 180, a primary PCI interface 230 and the primary PCI bus 110. Additionally, the second DMA controller 260 provides unidirectional direct memory access transfers to a first FIFO 300A via the local bus 180.

A third data path, created by the local bus 180 of the IOP 200, effectuates data transfers between the primary PCI interface 230, the first memory 210A, the embedded processor 170, the second memory 210B and the secondary PCI interface 250. The local bus 180 comprises a plurality of bidirectional address lines and a plurality of bidirectional data lines. At the direction of the controller 245, the plurality of address lines are converted to serve as data lines for use in transferring data. Thus, two distinct data paths are available and a transfer of data between the primary PCI interface 230 and the second memory 210B occurs simultaneously with a transfer of data between the secondary PCI interface 250 and the first memory 210A. Alternatively, the controller 245 can allocate both the plurality of data lines and the plurality of converted address lines to a single device for a unidirectional data transfer between one device and the allocated device .

A second level cache 270, external to the embedded processor 170, is accessed by the embedded processor 170 via the local bus 180 connections of the embedded processor 170. Isolation circuitry 280 allows the embedded processor 170 to be isolated from the local bus 180 address lines and data lines when reading from the second level cache 270 which allows other data transfers to occur simultaneously on the local bus 180. Additionally, the FIFO controller 310A issues an interrupt to the host CPU 130 upon completion of a data transfer from the first FIFO 300A across the primary PCI bus 110 to the host CPU 130.

The present invention also includes the first FIFO 300A with an associated FIFO controller 310A and the second FIFO 300B with an associated FIFO controller 310B. Both the first FIFO 300A and the second FIFO 300B receive data from the local bus 180 allowing data to be transferred to them from the first memory 210A, the second memory 210B or the embedded processor 170. The output of the first FIFO 300A communicates with the primary PCI interface 230 thereby allowing data to be received across the local bus 180, queued up in the first FIFO 300A and subsequently transferred to the primary PCI bus 110 via the primary PCI interface 230 as a burst of data. Similarly, the output of the second FIFO 300B communicates with the secondary PCI interface 250 allowing data to be received across the local bus 180, queued up in the second FIFO 300B and subsequently transferred to the secondary PCI bus 120 via the secondary PCI interface 250 as a burst of data.

In addition to providing an additional path to the first PCI interface 230 and the secondary PCI interface 250, the first FIFO 300A and the second FIFO 300B decouple the relatively slow sequential writes to either the primary PCI bus 110 or the secondary PCI bus 120 from the embedded processor 170 and allow these writes to be transmitted across the primary PCI bus 110 or the secondary PCI bus 120 as a PCI burst. Furthermore, the first FIFO 300A and the second FIFO 300B are used when commumicating with a target device on the primary PCI bus 110 or the secondary PCI bus 120 which does not have bus mastering capabilities.

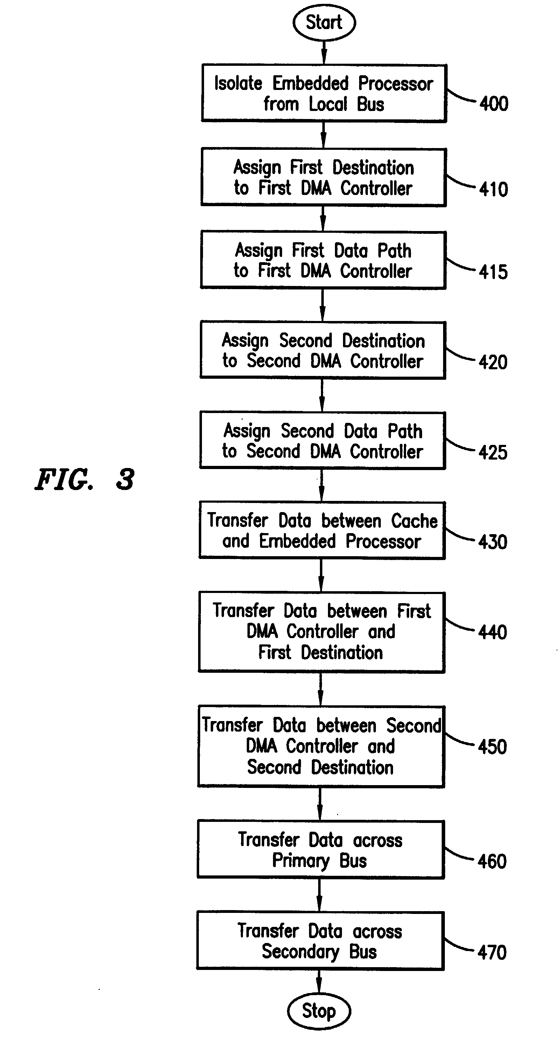

Referring additionally now to Fig. 3, there is illustrated a method for concurrent data transfer in an IOP consistent with the preferred embodiment of the present invention described in Fig 2. When a concurrent data transfer is required, for example when data resident in the second memory 210B is to be transferred to the primary PCI interface 230 for communication across the primary PCI bus 110 at the same time that data resident in the first memory 210A is to be transferred to the secondary PCI interface 250 for communication across the secondary PCI bus 120, the controller 245 isolates the embedded processor 170 from the local bus 180 by activating the isolation circuitry 280 (step 400). The controller 245 assigns a first destination device to the first DMA controller 240 (step 410). The first destination device can be the second memory 210B, the second FIFO 300B or, as in the case of this example, the secondary PCI interface 250. The controller 245 also assigns a first data path to the first DMA controller 240 (step 415). Since the controller 245 has isolated the embedded processor 170 and the plurality of address lines and the plurality of data lines of the local bus 180 are bidirectional, the controller 245 can assign either the plurality of address lines or the plurality of data lines as the first data path so long as neither have been previously assigned. If the plurality of address lines are currently in use the controller 245 assigns the plurality of data lines and vice versa.

In a similar fashion, the controller 245 assigns a second destination device to the second DMA controller 260 (step 420). The second destination device can be the first memory 210A, the first FIFO 300A or, as in the case of this example, the primary PCI interface 230. The controller 245 also assigns a second data path to the second DMA controller 260 (step 425). Since the controller 245 has isolated the embedded processor 170 and the plurality of address lines and the plurality of data lines of the local bus 180 are bidirectional, the controller 245 can assign either the plurality of address lines or the plurality of data lines as the second data path so long as neither have been previously assigned. If the plurality of address lines are currently in use the controller 245 assigns the plurality of data lines and vice versa. Once the data paths and destination devices have been assigned data transfers can occur concurrently. Data is transferred from the second level cache 270 to the embedded processor 170 (step 430). Data is transferred between the first DMA controller 240 and the first destination device (step 440). Data is transferred between the second DMA controller 260 and the second destination device (step 450). Data is transferred across the primary PCI bus 110 (step 460). Data transferred across the primary PCI bus 110 via the primary PCI interface 230 can either have the first DMA controller 240, the first FIFO 300A or the second DMA controller 260 as a data source. Data is also transferred across the secondary PCI bus 120 (step 470). Data transferred accross the secondary PCI bus 120 via the secondary PCI interface 250 can either have the second DMA controller 260, the second FIFO 300B or the first DMA controller 240 as a data source.

Although the preferred embodiment of the apparatus and method of the present invention have been illustrated in the accompanying Drawings and described in the foregoing Detailed Description, it is understood that the invention is not limited to the embodiments disclosed, but is capable of numerous rearrangements, modifications and substitutions without departing from the spirit of the invention as set forth and defined by the following claims. For example, while a PCI to PCI IOP has been described herein in detail, the teachings of the present invention can be applied to any type of bus to bus IOP.

## Claims

1. A computer system comprising:
a first memory for storing data;
a first data path for moving data between a primary bus and the first memory;
a second memory for storing data;
a second data path for moving data between a secondary bus and the second memory,
a third data path for moving data between the primary bus, the first memory, the secondary bus and the second memory; and
a controller for controlling the movement of data between the primary bus, the first memory, the secondary bus and the second memory.

2. The computer system as recited in claim 1, wherein the first data path comprises:
a primary bus interface for interfacing the computer system to the primary bus;
a first direct memory access controller for moving data between the primary bus interface and the first memory; and
further, wherein the second data path comprises:
a secondary bus interface for interfacing the computer system to the secondary bus; and
a second direct memory access controller for moving data between the secondary bus interface and the second memory.

3. The computer system as recited in claim 2, wherein the third data path comprises a local bus having a plurality of data lines and a plurality of address lines, the plurality of address lines being convertible to a second plurality of data lines at the direction of the controller.

4. The computer system as recited in claim 3, further comprising a primary bus to secondary bus bridge for moving data between the primary bus and the secondary bus.

5. The computer system as recited in claim 4, further comprising:
a first FIFO for queuing data received via the local bus to be transmitted on the primary bus; and
a second FIFO for queuing data received via the local bus to be transmitted on the secondary bus.

6. The computer system as recited in claim 5, further comprising a processor for processing data stored in the first memory and the second memory.

7. A computer system comprising:
a primary PCI bus interface for interfacing the computer system to a primary PCI bus;
a secondary PCI bus interface for interfacing the computer system to a secondary PCI bus;
a first memory for storing data
a first direct memory access controller for moving data between the first memory and the primary PCI bus interface;
a second direct memory access controller for moving data between the second memory and the secondary PCI bus interface;
a local bus for moving data between the primary PCI bus interface, the first memory, the second memory and the secondary PCI bus interface; and
a controller for controlling the movement of data between the primary PCI bus interface, the first memory, the second memory and the secondary PCI bus interface.

8. The computer system as recited in claim 7, wherein the local bus comprises:
a plurality of data lines; and
a plurality of address lines, the plurality of address lines being convertible to a second plurality of data lines at the direction of the controller.

9. The computer system as recited in claim 7, further comprising a primary PCI bus to secondary PCI bus bridge for moving data between the primary PCI bus and the secondary PCI bus.

10. The computer system as recited in claim 9, further comprising a processor for processing data stored in the first memory and the second memory, and further for accessing the primary PCI bus and the secondary PCI bus via the local bus.

11. The computer system as recited in claim 10, wherein the processor further supports I₂O functions and protocol.

12. A method for concurrent data transfer in an input output processor comprising the steps of:
isolating an embedded processor from a local bus;
assigning a first destination device to a first DMA controller;
assigning a first data path to the first DMA controller;
assigning a second destination device to a second DMA controller;
assigning a second data path to the second DMA controller;
transferring data between a cache and the embedded processor;
transferring data between the first DMA controller and the first destination device across the first data path;
transferring data between the second DMA controller and the second destination device across the second data path;
transferring data across a primary bus; and
transferring data across a secondary bus.

13. The method as recited in claim 12, wherein the step of assigning the first data path to the first DMA controller comprises the step of assigning the first DMA controller a plurality of data lines of a local bus; and further, wherein the step of assigning the second data path to the second DMA controller comprises the step of assigning the second DMA controller a plurality of address lines of the local bus.

14. The method as recited in claim 12, wherein the step of assigning the first data path to the first DMA controller comprises the step of assigning the first DMA controller a plurality of address lines of a local bus; and further, wherein the step of assigning the second data path to the second DMA controller comprises the step of assigning the second DMA controller a plurality of data lines of the local bus.

15. The method as recited in claim 12, wherein the step of assigning the first data path to the first DMA controller comprises the step of assigning the first DMA controller a plurality of address lines and a plurality of data lines of a local bus.

16. The method as recited in claim 12, wherein the step of assigning the second data path to the second DMA controller comprises the step of assigning the second DMA controller a plurality of address lines and a plurality of data lines of a local bus.

17. The method as recited in claim 12, wherein the step of assigning the first destination device to the first DMA controller comprises the step of assigning the second DMA as the first destination device.

18. The method as recited in claim 12, wherein the step of assigning the first destination device to the first DMA controller comprises the step of assigning a secondary PCI interface as the first destination device.

19. The method as recited in claim 12, wherein the step of assigning the second destination device to the second DMA controller comprises the step of assigning the first memory as the second destination device.

20. The method as recited in claim 12, wherein the step of assigning the second destination device to the second DMA controller comprises the step of assigning a primary PCI interface as the second destination device.

21. The method as recited in claim 12, wherein the step of assigning the second destination device to the second DMA controller comprises the step of assigning a first FIFO as the second destination device.

22. The method as recited in claim 12, wherein the step of assigning the first destination device to the first DMA controller comprises the step of assigning a second FIFO as the first destination device.
